(19) Europäisches Patentamt
European Patent Office
Office européen des brevets

(11) EP 4 737 048 A1

(12) **EUROPEAN PATENT APPLICATION**

(43) Date of publication:
06.05.2026 Bulletin 2026/19

(21) Application number: 25207696.3

(22) Date of filing: 09.10.2025

(51) International Patent Classification (IPC):
**B23K 26/082** (2014.01) **B23K 26/26** (2014.01)

(52) Cooperative Patent Classification (CPC):
**B23K 26/26; B23K 26/082**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 22.10.2024 JP 2024186134

(71) Applicant: **Panasonic Intellectual Property Management Co., Ltd.**
**Kadoma-shi, Osaka 571-0057 (JP)**

(72) Inventors:
• **WANG, Jingbo**
**Osaka, 571-0057 (JP)**
• **NISHIO, Masatoshi**
**Osaka, 571-0057 (JP)**

• **OSUMI, Toshihiro**
**Osaka, 571-0057 (JP)**
• **ISHII, Yuya**
**Osaka, 571-0057 (JP)**
• **TAKAHASHI, Wataru**
**Osaka, 571-0057 (JP)**
• **YOSHIMURA, Shukoh**
**Osaka, 571-0057 (JP)**
• **SHIBATA, Kenzo**
**Osaka, 571-0057 (JP)**
• **YAMAMOTO, Atsuki**
**Osaka, 571-0057 (JP)**

(74) Representative: **Eisenführ Speiser**
**Patentanwälte Rechtsanwälte PartGmbB**
**Postfach 10 60 78**
**28060 Bremen (DE)**

(54) **LASER WELDING APPARATUS**

(57) A laser head (10) changes the emission position of a laser beam (LB) relative to the tip of a filler wire (WA) during laser filler welding, and performs a scanning operation along an emission path (SD) that has a convex section (30) extending in a direction intersecting a welding direction (WD) and protruding in the opposite direction to the welding direction. The filler wire can thus be smoothly melted in the laser filler welding.

FIG.5

EP 4 737 048 A1

## Description

### CROSS-REFERENCE TO RELATED APPLICATION

This application claims priority to Japanese Patent Application No. 2024-186134 filed on October 22, 2024, the entire disclosure of which is incorporated herein by reference.

### BACKGROUND

The present disclosure relates to laser welding apparatuses.

Japanese Unexamined Patent Application Publication No. 2022-077544 discloses a welding method in which metal plates are butt-welded together by laser welding while feeding a filler wire into the gap between the metal plates.

In Japanese Unexamined Patent Application Publication No. 2022-077544, a laser beam moves along the gap while oscillating across it. As the laser beam moves, a wire feeding unit operates to start feeding the filler wire into the gap from the front side toward the rear side in the welding direction.

However, during the wire feeding operation, the tip of the filler wire may wobble, causing the position of the tip of the filler wire relative to the workpiece to vary.

In such a case, the filler wire may not be sufficiently irradiated with the laser beam, and smooth melting of the filler wire may be hindered.

The present disclosure has been made in view of the above circumstances, and an object thereof is to enable the filler wire to be smoothly melted in laser filler welding.

### SUMMARY

According to a first aspect, a laser welding apparatus including a wire feeding unit that feeds a filler wire toward a workpiece, a laser head that emits a laser beam toward a tip of the filler wire to perform laser filler welding on the workpiece, and a manipulator that moves the laser head in a predetermined welding direction includes: an emission position changing unit that performs a scanning operation that changes an emission position of the laser beam relative to the tip of the filler wire; and a control unit that controls an operation of the emission position changing unit such that, during the laser filler welding, the scanning operation is performed along an emission path that includes a convex section extending in a direction intersecting the welding direction and protruding in an opposite direction to the welding direction.

In the first aspect, even when the tip of the filler wire vibrates and wobbles during feeding of the filler wire, causing the position of the tip of the filler wire to vary relative to the workpiece, the filler wire can still be smoothly melted by the laser beam emitted along the emission path that includes the convex section extending in a direction intersecting the welding direction and protruding in the opposite direction to the welding direction. As a result, a wide, high-quality weld bead can be obtained.

According to a second aspect, in the laser welding apparatus of the first aspect, the emission path includes a plurality of the convex sections.

In the second aspect, the filler wire can be smoothly melted by the laser beam emitted along the emission path including the convex sections.

According to a third aspect, in the laser welding apparatus of the first or second aspect, the workpiece is made of a 2000-series, 6000-series, or 7000-series aluminum alloy, and the filler wire is made of a 4000-series aluminum alloy.

In the third aspect, by appropriately determining the material of the workpiece and the material of the filler wire, the likelihood of defects such as weld cracks can be reduced.

According to a fourth aspect, in the laser welding apparatus of the first or second aspect, the control unit controls the operation of the emission position changing unit such that a scanning speed during the scanning operation is constant.

In the fourth aspect, the energy of the laser beam can be uniformly applied to the tip of the filler wire. As a result, even when the feeding speed of the filler wire is increased, the filler wire can be smoothly melted.

The present disclosure enables smooth melting of the filler wire in laser filler welding.

### BRIEF DESCRIPTION OF THE DRAWINGS

FIG. 1 shows a schematic configuration of a laser welding apparatus according to a first embodiment.

FIG. 2 is a side view illustrating the arrangement of a laser beam and a filler wire.

FIG. 3 is a plan view illustrating the emission path of the laser beam.

FIG. 4 is an enlarged plan view of the emission path of the laser beam.

FIG. 5 shows coordinates on the emission path.

FIG. 6 is a graph illustrating the relationship among the angle, coordinates, and scanning speed when drawing a Lissajous waveform.

FIG. 7 is a graph illustrating the relationship among the angle, coordinates, and scanning speed when drawing a Lissajous waveform in a second embodiment.

FIG. 8 is an enlarged plan view of the emission path of the laser beam in a third embodiment.

FIG. 9 shows coordinates on the emission path.

FIG. 10 is a graph illustrating the relationship among the angle, coordinates, and scanning speed when drawing a Lissajous waveform.

FIG. 11 is a graph illustrating the relationship among the angle, coordinates, and scanning speed when drawing a Lissajous waveform in a fourth embodiment.

FIG. 12 shows the emission path in the case of $n = 8$.

FIG. 13 shows the emission path in the case of $n = 16$.

FIG. 14 shows the emission path in the case of $n = 32$.

DETAILED DESCRIPTION

Hereinafter, embodiments of the present disclosure will be described with reference to the drawings. The following description of suitable embodiments is essentially illustrative only, and is not intended to limit the present disclosure, its applications, or its uses. In the figures, the X direction, Y direction, and Z direction are indicated by arrows. Unless otherwise specified, the following description refers to the directions indicated by the arrows.

First Embodiment

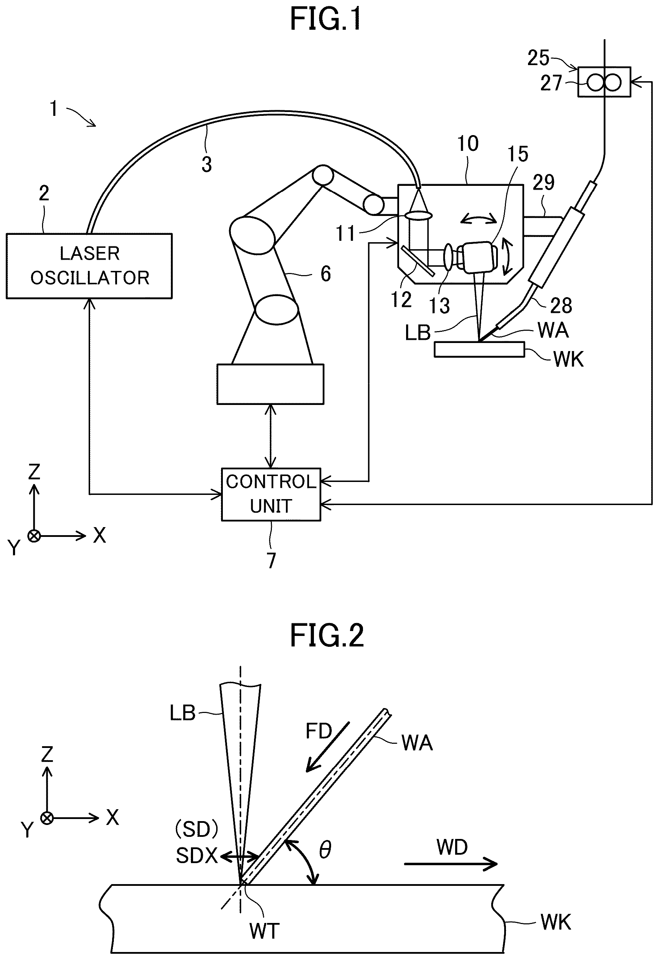

As shown in FIG. 1, a laser welding apparatus 1 includes a laser oscillator 2, a transmission fiber 3, a manipulator 6, a control unit 7, a laser head 10, and a wire feeding unit 25.

The laser oscillator 2 generates a laser beam LB in accordance with a command from the control unit 7. The incident end of the transmission fiber 3 is connected to the laser oscillator 2, and the emission end of the transmission fiber 3 is connected to the laser head 10. The laser beam LB is transmitted from the laser oscillator 2 to the laser head 10 via the transmission fiber 3.

The wire feeding unit 25 includes a pair of feeding rollers 27 and a wire nozzle 28. The feeding rollers 27 are rotated by a feeding motor (not shown). The feeding rollers 27 feed a filler wire WA for welding. Multiple pairs of feeding rollers 27 may be provided.

The wire nozzle 28 is supported on the laser head 10 via a support portion 29. The wire nozzle 28 guides the filler wire WA toward a welding point of a workpiece WK.

The manipulator 6 includes a plurality of arms. The laser head 10 is mounted on the distal end of an arm of the manipulator 6. The manipulator 6 moves the laser head 10 relative to the workpiece WK in accordance with a command from the control unit 7.

The control unit 7 controls the operation of the laser oscillator 2, the manipulator 6, the laser head 10, and the wire feeding unit 25. In addition to controlling the speed at which the manipulator 6 moves the laser head 10, the control unit 7 also controls when to start and stop output of the laser beam LB, and its output intensity. The control unit 7 further controls the operation of an emission position changing unit 15 of the laser head 10, which will be described later.

Although not shown in the figures, a dedicated control unit independent of the control unit 7 may alternatively control the operation of the emission position changing unit 15 of the laser head 10. In this case, the control unit 7 transmits to the dedicated control unit various conditions such as operation parameters of the emission position changing unit 15, laser output, and operation timing.

The laser head 10 emits the laser beam LB, generated by the laser oscillator 2, toward the workpiece WK. A collimating lens 11, a reflective mirror 12, a focusing lens 13, and the emission position changing unit 15 are housed in the laser head 10.

The collimating lens 11 collimates the laser beam LB incident on the laser head 10 via the transmission fiber 3.

The reflective mirror 12 reflects the laser beam LB, collimated by the collimating lens 11, toward the focusing lens 13. The focusing lens 13 focuses the laser beam LB. The laser beam LB focused by the focusing lens 13 is incident on the emission position changing unit 15.

The emission position changing unit 15 changes the emission position of the laser beam LB on the workpiece WK. The emission position changing unit 15 is constituted by, for example, a galvanometer mirror. The laser beam LB, with its emission position changed by the emission position changing unit 15, is emitted toward the workpiece WK.

It is suitable that the workpiece WK be made of an aluminum alloy of the 2000 series, 6000 series, or 7000 series, and that the filler wire WA be made of an aluminum alloy of the 4000 series. Examples of the 4000-series aluminum alloy include A4043 and A4047.

By appropriately determining the material of the workpiece WK and the material of the filler wire WA, the molten filler wire WA can be uniformly mixed into the weld pool of the workpiece WK, thereby reducing the likelihood of defects such as weld cracks.

Scanning Operation

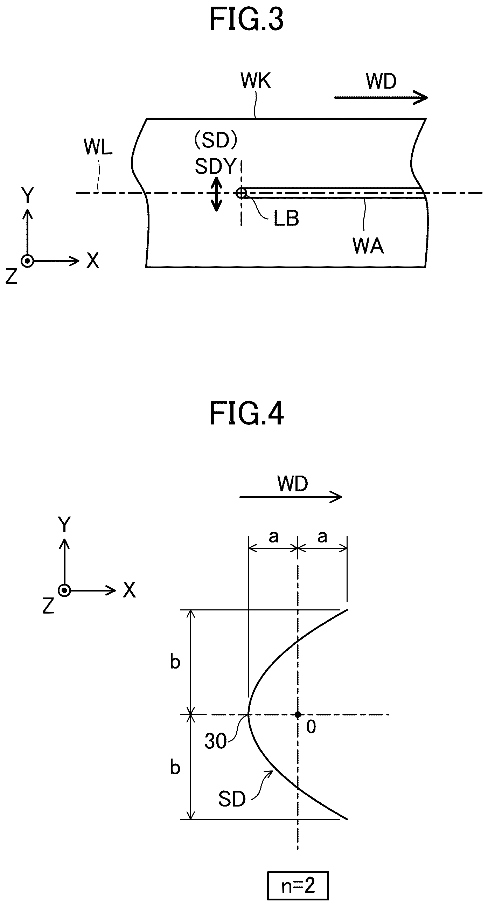

As shown in FIGS. 2 and 3, the laser welding apparatus 1 performs laser filler welding while moving the laser beam LB and the filler wire WA in a predetermined welding direction WD. The welding direction WD indicates the direction in which the laser head 10 is moved when the workpiece WK is fixed. Although the laser beam LB is illustrated as being emitted perpendicularly to the workpiece WK, the laser beam LB may be emitted obliquely to the workpiece WK.

In laser filler welding, the filler wire WA is fed toward the workpiece WK. In FIG. 2, the filler feeding direction is denoted as FD and the filler feeding angle as θ. The laser beam LB is emitted to a portion where the tip WT of the filler wire WA contacts the workpiece WK, or to a region adjacent to that portion.

During laser filler welding, the emission position changing unit 15 performs a scanning operation that changes the emission position of the laser beam LB relative to the tip WT of the filler wire WA. In the scanning operation, the emission position of the laser beam LB is changed along an emission path SDX (X direction in FIG. 2), which is an emission path SD extending in the welding direction WD, and along an emission path SDY (Y direction in FIG. 3), which is an emission path SD intersecting the welding direction WD.

Specifically, as shown enlarged in FIG. 4, the emission path SD has a convex section 30 extending in a direction intersecting the welding direction WD and protruding in the opposite direction to the welding direction WD.

FIG. 4 is equivalent to a trajectory drawn on the surface of the workpiece WK by the laser beam LB, whose emission position is changed by the emission position changing unit 15, when the workpiece WK is stationary. When the welding speed is nonzero, this trajectory differs from the actual trajectory formed on the surface of the workpiece WK by the laser beam LB.

Hereinafter, descriptions of the trajectory drawn by the laser beam LB whose emission position is changed by the emission position changing unit 15, and of the scanning speed described later follow this concept, and therefore individual explanations thereof will be omitted.

In FIG. 4, "a" denotes the amplitude in the X direction, and "b" denotes the amplitude in the Y direction. The X-direction amplitude a and the Y-direction amplitude b are determined according to the diameter of the filler wire WA. For example, as the diameter of the filler wire WA increases, the X-direction amplitude a and the Y-direction amplitude b are set to larger values.

In the laser welding apparatus 1 according to the present embodiment, as the variation in the position of the tip WT of the filler wire WA increases, the X-direction amplitude a and the Y-direction amplitude b are set to larger values. The variation in the position of the tip WT of the filler wire WA depends on the wire feeding unit 25, the wire nozzle 28, and the material of the filler wire WA.

The control unit 7 controls the operation of the emission position changing unit 15 so as to perform the scanning operation along the emission path SD.

During laser filler welding, the scanning operation is performed at the tip WT of the filler wire WA at a scanning speed based on a predetermined frequency.

By performing the scanning operation near the tip WT of the filler wire WA along a preset emission path SD and at a preset scanning speed, the filler wire WA can be smoothly melted. Furthermore, the molten filler wire WA can be uniformly mixed into the weld pool of the workpiece WK. As a result, a high-quality weld bead with reduced welding defects can be obtained.

Even when the tip of the filler wire WA vibrates and wobbles during feeding of the filler wire WA, causing the position of the tip of the filler wire WA relative to the workpiece WK to vary, the filler wire WA can still be smoothly melted by the laser beam LB emitted along the emission path SD having the convex section 30. As a result, a wide, high-quality weld bead can be obtained.

Equations for Calculating Emission Path of Laser Beam

The emission path SD of the laser beam LB is expressed, using a sine function, as a Lissajous waveform having a convex section 30 extending in a direction intersecting the welding direction WD and protruding in the opposite direction to the welding direction WD. The equations for calculating the emission path of the laser beam will be described below.

Let $x(\alpha)$ denote the X-coordinate of the laser beam LB and $y(\alpha)$ the Y-coordinate of the laser beam LB. The value $x(\alpha)$ represents the X-coordinate of the emission path or Lissajous waveform, and the value $y(\alpha)$ represents the Y-coordinate of the emission path or Lissajous waveform.

Let $\alpha$ denote the angle when drawing the Lissajous waveform, a the X-direction amplitude of the Lissajous waveform, b the Y-direction amplitude of the Lissajous waveform, $\varphi$ the phase when drawing the Lissajous waveform, f1 the scanning frequency of the laser beam LB in the X direction, f2 the scanning frequency of the laser beam LB in the Y direction, $\omega$ the angular velocity, and t the time. The angle $\alpha$ is expressed as $\alpha = \omega \cdot t$. The scanning frequency f1 is expressed as f1 = n·f2, where n is an even number. In this case, Equations (1) and (2) below hold.

$$x(\alpha) = a \cdot \sin(f1 \cdot \alpha + \varphi) \qquad (1)$$

$$y(\alpha) = b \cdot \sin(f2 \cdot \alpha + \varphi) \qquad (2)$$

In the example shown in FIG. 4, the parameters for forming the Lissajous waveform are set as follows: a = 0.5 (mm), b = 1 (mm), f2 = 1 (Hz), f1 = n·f2 (Hz), $\varphi$ = 90 (deg), and n = 2.

The emission path SD of the laser beam LB has n/2 convex sections 30 extending in a direction intersecting the welding direction WD and protruding in the opposite direction to the welding direction WD. For example, when n = 2, the emission path SD has one convex section 30 (n/2 = 1). That is, the emission path SD has one convex section 30 extending in a direction intersecting the welding direction WD and protruding toward the opposite direction to the welding direction WD.

Accordingly, the emission path SD of the laser beam LB in the Y direction is symmetrical with respect to the X-axis, enabling the filler wire WA to be uniformly melted.

Note that φ = 90 is merely an example, and the present disclosure is not limited to this. For example, φ = 270 may also be used. In this case, in FIG. 2, the filler wire WA needs to be positioned to the left of the laser beam LB, and the arrow indicating the welding direction WD needs to point to the left.

In Equations (1) and (2), the Lissajous waveform is expressed using sine functions. However, the Lissajous waveform may alternatively be expressed using, for example, cosine functions or a combination of sine and cosine functions.

Equations for Calculating Scanning Speed of Laser Beam

The scanning speed of the laser beam LB when drawing the Lissajous waveform expressed by Equations (1) and (2) is derived by Equations (3) to (5) below.

Let vx denote the drawing speed of the laser beam LB in the X direction, vy the drawing speed of the laser beam LB in the Y direction, $dx(\alpha)/d\alpha$ the derivative of $x(\alpha)$ with respect to $\alpha$, and $dy(\alpha)/d\alpha$ the derivative of $y(\alpha)$ with respect to $\alpha$. In this case, Equations (3) and (4) below hold.

$$vx = dx(\alpha)/d\alpha = a \cdot f1 \cdot \cos(f1 \cdot \alpha + \varphi) \qquad (3)$$

$$vy = dy(\alpha)/d\alpha = b \cdot f2 \cdot \cos(f2 \cdot \alpha + \varphi) \qquad (4)$$

Here, $dx(\alpha)/d\alpha$ corresponds to the X-direction component of the scanning speed of the laser beam LB, and $dy(\alpha)/d\alpha$ corresponds to the Y-direction component of the scanning speed of the laser beam LB.

Since the proportional relationship $\alpha = \omega \cdot t$ holds, the scanning speed v can be expressed in terms of changes in angle $\alpha$, rather than changes in the X- or Y-coordinate with respect to time t, as shown in Equation (5) below.

$$v = \{[dx(\alpha)/d\alpha]^2 + [dy(\alpha)/d\alpha]^2\}^{0.5} \qquad (5)$$

Example of Scanning Speed of Laser Beam

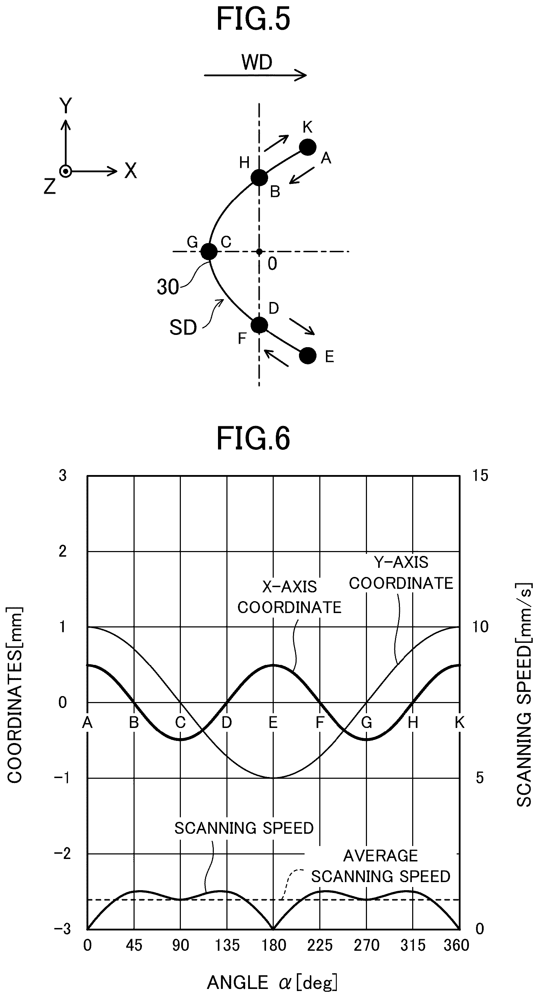

An example of the scanning speed of the laser beam LB will now be described. The simplest pattern will be described using FIG. 5. In the example shown in FIG. 5, n = 2, and the emission path SD has one convex section 30 extending in a direction intersecting the welding direction WD and protruding in the opposite direction to the welding direction WD.

In FIG. 5, points A, B, C, D, E, F, G, H, and K represent the positions on the path at $\alpha$ = 45, 90, 135, 180, 225, 315, and 360 (deg), respectively, during one scanning cycle.

FIG. 6 shows the X-axis coordinates, Y-axis coordinates, and scanning speeds during one cycle as the angle $\alpha$ is varied. In the example shown in FIG. 6, the parameters are set as follows: a = 0.5 (mm) and b = 1 (mm). The scanning speed in this figure represents the magnitude of speed, and does not indicate the direction of motion.

In the example of FIG. 6, the scanning speed reaches a peak near points B, D, F, and H of the emission path SD. On the other hand, the scanning speed becomes zero at points A, E, and K. That is, the laser beam LB momentarily stops at these points. In actual welding, it is desirable to minimize the angular range in which the scanning speed decreases toward zero near points A, E, and K of the emission path SD.

The numerical values used in the above calculation example are merely illustrative, and the present disclosure is not limited to this.

Second Embodiment

In the following description, the same portions as those in the first embodiment will be denoted by the same reference characters, and only differences will be described.

In the present embodiment, the scanning speed of the laser beam LB is kept constant. Specifically, the control unit 7 controls the operation of the emission position changing unit 15 such that the scanning speed during the scanning operation remains constant.

More specifically, while the laser beam LB is moved along the emission path SD, the scanning speed (tangential speed) of the laser beam LB at points A to K on the emission path SD is kept constant.

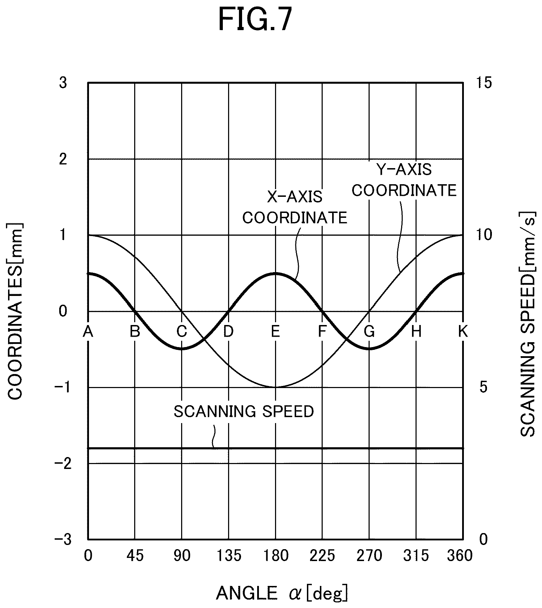

In the example shown in FIG. 7, the target scanning speed is set to a constant value of 3 mm/s. The target scanning speed can be set as desired by the user, and is not limited to this value. The target scanning speed differs from the calculated average scanning speed obtained in FIG. 6 in the first embodiment.

In the example shown in FIG. 7, the parameters for forming the Lissajous waveform are set as follows: a = 0.5 (mm), b = 1 (mm), f2 = 1 (Hz), f1 = n·f2 (Hz), φ = 90 (deg), and n = 2. When n = 2, the emission path SD of the laser beam LB has one convex section 30 extending in a direction intersecting the welding direction WD and protruding in the opposite direction to the welding direction WD.

By making the scanning speed constant throughout the entire period of one cycle of the scanning operation, the energy of the laser beam LB can be uniformly applied to the tip of the filler wire WA. As a result, even when the feeding speed of the filler wire WA is increased, the filler wire WA can be smoothly melted.

Third Embodiment

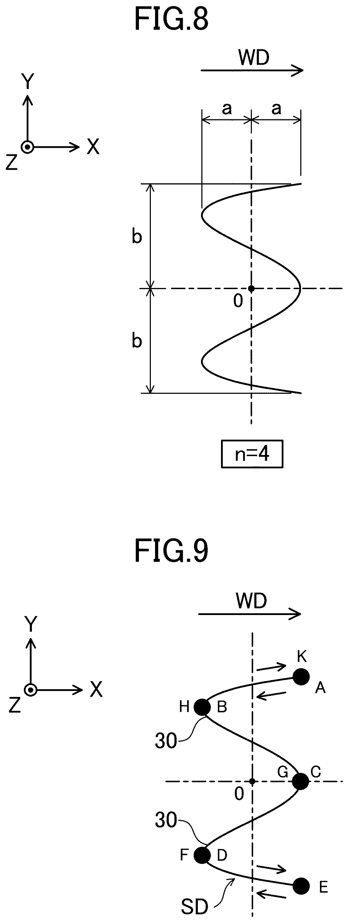

In the example shown in FIG. 8, the parameters for forming the Lissajous waveform are set as follows: a = 0.5 (mm), b = 1 (mm), f2 = 1 (Hz), f1 = n·f2 (Hz), φ = 90 (deg), and n = 4.

The emission path SD of the laser beam LB has n/2 convex sections 30 extending in a direction intersecting the welding direction WD and protruding in the opposite direction to the welding direction WD. For example, when n = 4, the emission path SD has two convex sections 30 (n/2 = 2). That is, the emission path SD has two convex sections 30 extending in a direction intersecting the welding direction WD and protruding in the opposite direction to the welding direction WD.

Accordingly, the emission path SD of the laser beam LB in the Y direction is symmetrical with respect to the X-axis, enabling the filler wire WA to be uniformly melted.

In FIG. 9, points A, B, C, D, E, F, G, H, and K represent the positions on the path at α = 45, 90, 135, 180, 225, 315, and 360 (deg), respectively, during one scanning cycle.

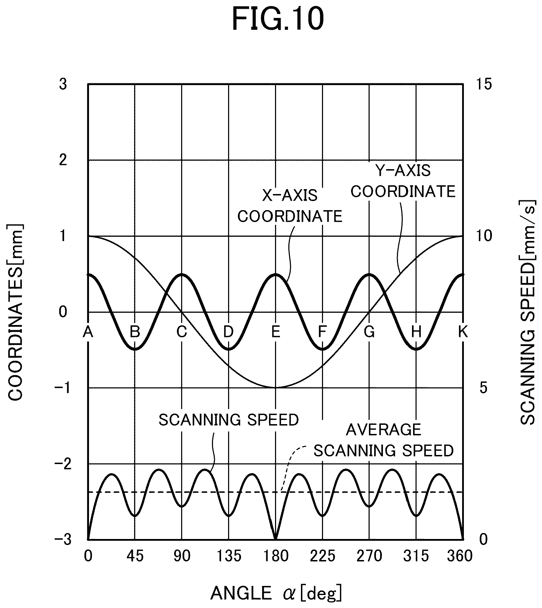

FIG. 10 shows the X-axis coordinates, Y-axis coordinates, and scanning speeds during one cycle as the angle α is varied. In the example shown in FIG. 10, the parameters are set as follows: a = 0.5 (mm) and b = 1 (mm). The scanning speed in this figure represents the magnitude of speed, and does not indicate the direction of motion.

In the example shown in FIG. 10, the scanning speed reaches a peak in the intervals A-B, B-C, C-D, D-E, E-F, F-G, G-H, and H-K of the emission path SD.

By increasing the value of n to 4 (n = 4) and thereby increasing the number of convex sections 30 of the emission path SD to two, the average scanning speed increases and the fluctuation range also increases compared to the case of n = 2. This is because the speed in the X direction (dx(α)/dα) increases as the scanning frequency in the X direction increases.

Compared with the example shown in FIG. 6, the fluctuation range of the scanning speed is greater, but the angular range in which the scanning speed decreases toward zero near points A, E, and K of the emission path SD is smaller. As described above, this operation is desirable in actual welding. This operation can suppress concentration of laser energy near points A, E, and K of the emission path SD that would otherwise occur due to decreases in scanning speed.

The laser beam LB emitted along the emission path SD having multiple convex sections 30 can thus smoothly melt the filler wire WA.

Fourth Embodiment

In the present embodiment, the scanning speed of the laser beam LB is kept constant. Specifically, the control unit 7 controls the operation of the emission position changing unit 15 such that the scanning speed during the scanning operation remains constant.

More specifically, while the laser beam LB is moved along the emission path SD, the scanning speed (tangential speed) of the laser beam LB at points A to K on the emission path SD is kept constant.

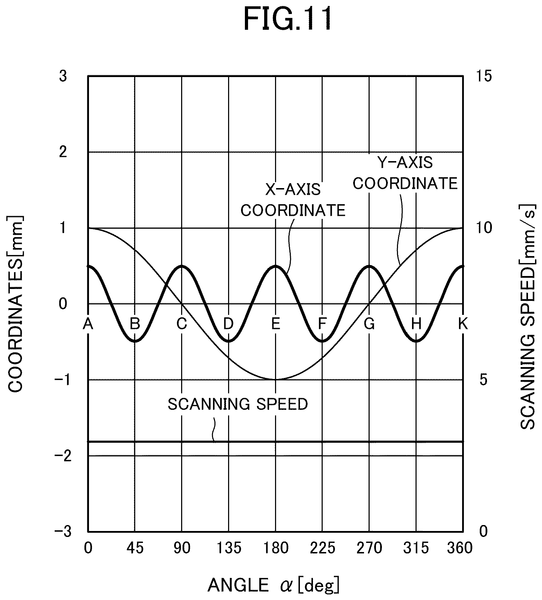

In the example shown in FIG. 11, the target scanning speed is set to a constant value of 3 mm/s. The target scanning speed can be set as desired by the user, and is not limited to this value. The target scanning speed differs from the calculated average scanning speed obtained in FIG. 10 in the third embodiment.

In the example shown in FIG. 11, the parameters for forming the Lissajous waveform are set as follows: a = 0.5 (mm), b = 1 (mm), f2 = 1 (Hz), f1 = n·f2 (Hz), φ = 90 (deg), and n = 4. When n = 4, the emission path SD of the laser beam LB has two convex sections 30 extending in a direction intersecting the welding direction WD and protruding in the opposite direction to the welding direction WD.

By making the scanning speed constant throughout the entire period of one cycle of the scanning operation, the energy of the laser beam LB can be uniformly applied to the tip of the filler wire WA. As a result, even when the feeding speed of the filler wire WA is increased, the filler wire WA can be smoothly melted.

Other Embodiments

The above embodiments may also be configured as follows.

The above embodiments illustrate the cases where n, which is a parameter for forming the Lissajous waveform, is set to 2 (n = 2) and 4 (n = 4), that is, the cases where the emission path SD has one convex section 30 and two convex sections 30, respectively. However, the present disclosure is not limited to these.

Specifically, when the feeding speed of the filler wire WA is high, n is generally set to a larger value in order to uniformly melt the filler wire WA. In this way, n monotonically increases as the feeding speed of the filler wire WA increases.

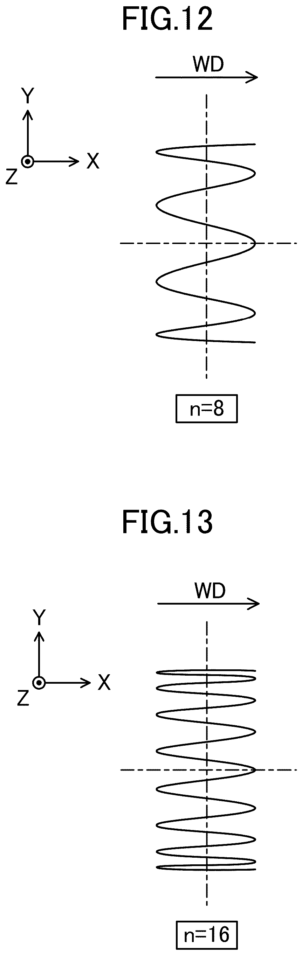

For example, as shown in FIG. 12, n may be set to 8 (n = 8) so that the emission path SD has four convex sections 30 extending in a direction intersecting the welding direction WD and protruding in the opposite direction to the welding direction WD.

Similarly, as shown in FIG. 13, n may be set to 16 (n = 16) so that the emission path SD has eight convex sections 30 extending in a direction intersecting the welding direction WD and protruding in the opposite direction to the welding direction WD.

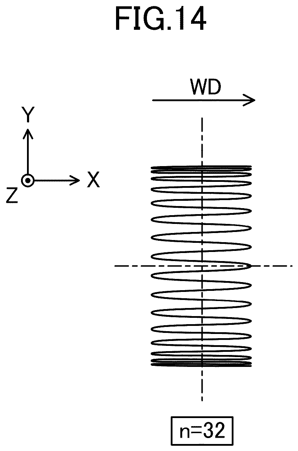

As shown in FIG. 14, n may be set to 32 (n = 32) so that the emission path SD has sixteen convex sections 30 extending in a direction intersecting the welding direction WD and protruding in the opposite direction to the welding direction WD.

As described above, the present disclosure enables smooth melting of the filler wire in laser filler welding, thereby providing a highly practical effect and making the disclosure extremely useful with high industrial applicability.

**Claims**

1.  A laser welding apparatus including a wire feeding unit that feeds a filler wire toward a workpiece, a laser head that emits a laser beam toward a tip of the filler wire to perform laser filler welding on the workpiece, and a manipulator that moves the laser head in a predetermined welding direction, the laser welding apparatus comprising:

    an emission position changing unit that performs a scanning operation that changes an emission position of the laser beam relative to the tip of the filler wire; and
    a control unit that controls an operation of the emission position changing unit such that, during the laser filler welding, the scanning operation is performed along an emission path that includes a convex section extending in a direction intersecting the welding direction and protruding in an opposite direction to the welding direction.

2.  The laser welding apparatus of claim 1, wherein the emission path includes a plurality of the convex sections.

3.  The laser welding apparatus of claim 1 or 2, wherein

    the workpiece is made of a 2000-series, 6000-series, or 7000-series aluminum alloy, and
    the filler wire is made of a 4000-series aluminum alloy.

4.  The laser welding apparatus of claim 1 or 2, wherein the control unit controls the operation of the emission position changing unit such that a scanning speed during the scanning operation is constant.

# FIG.1

LASER OSCILLATOR

CONTROL UNIT

# FIG.2

# FIG.3

WK
WD
WL
Y
Z
X
(SD)
SDY
LB
WA

# FIG.4

WD
Y
Z
X
a
a
b
b
30
0
SD
n=2

# FIG.5

# FIG.6

# FIG.7

# FIG.8

WD →

Y
Z ⊙ → X

a | a

b

b

0

n=4

# FIG.9

WD →

Y
Z ⊙ → X

K
A

H B

30

G C

0

30

F D

SD

E

# FIG.10

# FIG.11

## FIG.12

WD

Y

Z → X

n=8

## FIG.13

WD

Y

Z → X

n=16

# FIG.14

n=32

# EUROPEAN SEARCH REPORT

**Application Number**

EP 25 20 7696

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 238 298 A (UNIV BEIJING TECHNOLOGY) 19 January 2021 (2021-01-19) * figures 2,3 * ----- | 1-4 | INV. B23K26/082 B23K26/26 |

**TECHNICAL FIELDS SEARCHED (IPC)**

B23K

The present search report has been drawn up for all claims

| Place of search | Date of completion of the search | Examiner |
|---|---|---|
| Munich | 16 March 2026 | Caubet, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 7696

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2026

| Patent document cited in search report | | Publication date | Patent family member(s) | | Publication date |
|---|---|---|---|---|---|
| CN 112238298 | A | 19-01-2021 | CN | 112238298 A | 19-01-2021 |
| | | | US | 2024383073 A1 | 21-11-2024 |
| | | | WO | 2022083013 A1 | 28-04-2022 |

EPO FORM P0459

For more details about this annex : see Official Journal of the European Patent Office, No. 12/82

**REFERENCES CITED IN THE DESCRIPTION**

**Patent documents cited in the description**

- JP 2024186134 A

- JP 2022077544 A